# EUROPEAN PATENT SPECIFICATION

(11) **EP 4 635 817 B1**
(45) Date of publication and mention of the grant of the patent: **07.10.2026**
(21) Application number: 24171042.5
(22) Date of filing: 18.04.2024
(51) Int. Cl.: B60W 40/064, B60W 40/10, B60W 40/12, B60W 40/068

(54) **A METHOD FOR TIRE CHANGE ADAPTION OF A VEHICLE HAVING TIRES, A SYSTEM FOR TIRE CHANGE ADAPTION OF A VEHICLE HAVING TIRES AND A VEHICLE COMPRISING THE SYSTEM**
VERFAHREN ZUR REIFENWECHSELANPASSUNG EINES FAHRZEUGS MIT REIFEN, SYSTEM ZUR REIFENWECHSELANPASSUNG EINES FAHRZEUGS MIT REIFEN UND FAHRZEUG MIT DEM SYSTEM
PROCÉDÉ D'ADAPTATION DE CHANGEMENT DE PNEU D'UN VÉHICULE AYANT DES PNEUS, SYSTÈME D'ADAPTATION DE CHANGEMENT DE PNEU D'UN VÉHICULE AYANT DES PNEUS ET VÉHICULE COMPRENANT LE SYSTÈME

(43) Date of publication of application: 22.10.2025
(73) Proprietor: VOLVO TRUCK CORPORATION, 405 08 Göteborg (SE)
(72) Inventor: WILHELMSSON, Martin, 423 39 Torslanda (SE); STJERNBERG, Oscar, 411 35 Göteborg (SE); ERIKSSON, Anders, 423 49 Torslanda (SE)
(74) Representative: Zacco Sweden AB

(56) References cited:
- WO-A1-2023/211338
- US-A1- 2020 238 929
- US-A1- 2021 001 861

## Description

### TECHNICAL FIELD OF THE INVENTION

The disclosure relates generally to vehicles having tires. In particular aspects, the invention relates to a method for tire change adaption of a vehicle having tires, a system for tire change adaption of a vehicle having tires and a vehicle as specified by the appended claims. The disclosure can be applied to heavy-duty vehicles, such as trucks, buses, and construction equipment, among other vehicle types. The vehicles may be electric vehicles or hybrid vehicles. Although the disclosure may be described with respect to a particular vehicle, the disclosure is not restricted to any particular vehicle.

### BACKGROUND ART

Accurate estimation of the vehicle range for a vehicle is crucial for effective trip planning, optimizing energy management, as well as to promote environmentally responsible transportation thereby fostering a transition toward cleaner, more efficient mobility. Correct driving range estimation also plays a crucial role in vehicle design and engineering, influencing decisions related to battery capacity, energy management systems, aerodynamics, and overall vehicle efficiency. Manufacturers may use range estimates to optimize vehicle performance and meet consumer expectations. Accurate driving range estimation also empowers drivers to plan their journeys confidently, manage and monitor energy consumption effectively.

Main challenges in estimating vehicle range, also referred to as driving range, include accurately accounting for real-world driving conditions such as temperature, terrain, and traffic patterns, which can significantly impact the energy consumption of the vehicle. To this end, changes to the vehicle and/or the driving conditions may, for example, also impact the interaction between the tires of the vehicle and the road thereby affecting the possible driving range. By way of example, may tire parameters such as rolling resistance, tire size and type, and tire pressure, or changes to these parameters have an effect on the obtainable vehicle range.

There is therefore a continuous research ongoing among vehicle manufacturers as well as tire manufacturers study and develop new tire technologies aimed at reducing rolling resistance and improving overall efficiency. During the development phase of the vehicles, for example, electric vehicles, manufacturers conduct extensive testing to evaluate the impact of tire parameters on range. This includes testing different tire sizes, types, tread patterns, and inflation pressures to determine the most efficient configurations. Some vehicle models may also comprise systems that monitor tire pressure and alert drivers when tire inflation is below optimal levels. Proper tire maintenance helps ensure that the vehicle operates at peak efficiency, maximizing vehicle range. There is, however, a need to further improve the methods and system for determining the vehicle range for a vehicle. There is in particular a need for cost effective and efficient methods and systems that allow for accurate vehicle range estimates that reliably consider changes to the tires of the vehicle. In this context, prior art US 2020/238929 A1 relates generally to improving the range of a vehicle and, more particularly, to apparatus, systems, and methods for estimating and maximizing the remaining range of a vehicle based on external factors, such as changes in tire pressure and/or carried mass. This method has particular but not exclusive utility for consumer and commercial cars and trucks with electric or internal combustion propulsion. Prior art WO 2023/211338 A1 relates in general to a method for estimating distance to empty for a vehicle. Moreover, WO 2023/211338 A1 relates in general to a control device configured to estimate distance to empty for a vehicle. In prior art US 2021/001861 A1 a vehicular road type recognition system is described. In particular the system analyzes data from one or sensors relating to road condition and estimates at least one of a vehicle range, a vehicle maximum safe speed, or a braking distance.

### SUMMARY OF THE INVENTION

According to a first aspect of the invention, there is provided a method for tire change adaption of a vehicle having tires, the method comprising: detecting a change in tire friction for a plurality of the tires by monitoring one or more tire parameters; registering a point in time associated with the occurrence of the detected change in tire friction and performing a calendar query pertaining to the registered point in time; determining a tire friction difference value pertaining to the detected change of tire friction; and upon the tire friction difference value being above a threshold value and the registered point in time being associated with, as determined by the calendar query, a calendar event, wherein the calendar event pertains to a date or time period for summer or winter tire changeover; communicating with a vehicle range estimator comprising tire friction values and updating the tire friction values based on the detected change of tire friction. The first aspect of the disclosure may seek to solve the problem of determining the vehicle range for a vehicle. A technical benefit may include an improved method allowing for an accurate vehicle range estimate considering a change of tires. A more reliable detection of a change of tires for the vehicle may moreover be provided. The method may allow for an improved discrimination between a change of the tires and a change to one or more of the tires of the vehicle. Put differently, the method may more accurately determine if a change of tires between winter and summer tires has occurred. In other words, the method may provide an improved method for identifying a statistically relevant change in tire friction that is occurring in relation to a calendar event or calendar time relevant for when a tire change between summer/winter tires would normally be mandated and/or performed. The method may allow, based on the change of tire friction, that a tire change between summer and winter tires or vice versa has been performed.

The wording point in time is to be understood as a specific moment in time. The moment may, for example, be a specific month, day, or time of day. The point in time may be associated with a time period.

The wording calendar query should be construed as searching for and/or retrieving calendar data. Put differently, the method comprises searching and/or querying a calendar or calendar system to obtain calendar data. The calendar data may comprise data pertaining to one or more calendar events, time periods, and/or scheduled appointments.

The registered point in time may overlap with the calendar event. The calendar event may be predetermined. The calendar event may be a stored calendar event. The calendar event may be stored in the form of calendar data in a memory.

The vehicle range estimator may be arranged in the vehicle. The vehicle range estimator may be arranged remotely to the vehicle.

The updating may be by using the detected change in tire friction. The updating may use the determined tire friction difference value for the plurality of the tires. The updating may comprise using determined tire friction values. The tire friction values may be stored in the vehicle range estimator and associated with the detected change in tire friction, i.e. by the detected one or more tire parameters.

Optionally in some examples, including in at least one preferred example, the detecting of a change in tire friction for a plurality of the tires pertains to all driving wheels of the vehicle or for all the tires of the vehicle. A technical benefit may include that a more accurate method is provided. By detecting a change to all tires or at least to the tires pertaining to the driving wheels of the vehicle an improved relationship or correlation with the detected change in tire friction and the calendar event may be obtained. Put differently, as all or at least all of the tires on the driving wheels are changed for the summer/winter tire change, a more reliable updating of tire friction values is provided.

Optionally in some examples, including in at least one preferred example, the point in time comprises data pertaining to a day of the year. A technical benefit may include an improved accuracy for tire change adaption. Put differently, the determined day allows for an improved correlation with the date or time period for the summer/winter tire change.

Optionally in some examples, including in at least one preferred example, the point in time comprises data pertaining to a time of the day. A technical benefit may include improved accuracy for tire change adaption. The time of day allows, for example, to exclude changes at hours when change of tires is less like to happen. Put differently, detected changes in tire friction occurring for example in the night etc. may be excluded allowing for a more accurate method response to changes between winter and summer tires.

Optionally in some examples, including in at least one preferred example, the calendar event comprises data pertaining to a scheduled tire change. A technical benefit may include that a correlation with "scheduled appointment" for tire change is possible allowing for increased accuracy.

Optionally in some examples, including in at least one preferred example, the method further comprises determining a geolocation of the vehicle and wherein the calendar query comprises associating the calendar event based on the geolocation such that the date or time period for summer or winter tire changeover is determined based on the geolocation. A technical benefit may include a more precise association of the registered point in time and the period for winter/summer tire change for the vehicle relevant for the location where the vehicle is. By way of example, data pertaining to geolocation allows for the identification of the decided time period for winter/summer tires change at the location of the vehicle. This is beneficial as the time period may vary between different location, such as between different countries. An improved correlation with the accurate period for winter/summer tire change may therefore be obtained even for a vehicle moving between different location, such as between different countries. This as the decision to mandate or recommend winter tires often depends on factors like climate, road safety concerns, and local regulations. By way of example, the difference in time period for change over and/or climate conditions in the north or in the south of a country may be considered.

Optionally in some examples, including in at least one preferred example, the one or more tire parameters is one or more of a tire radius, a tire pressure, a tire strain value and a tire temperature. A technical benefit may include proving an efficient detection of a change in tire friction. Put differently, the determining and/or the detection of a change in tire friction for a vehicle may involve considering several factors that influence the interaction between the tires and the road surface. Tire friction, often referred to as tire-road friction or tire-road grip, may be efficiently estimated based on one or more of the above listed tire parameters.

By way of example, the tire radius may be determined using Tire Pressure Monitoring Systems (TPMS) or by using a ground radar, for example. It can also be estimated using ground speed (for example from a GPS system) in comparison to estimated vehicle wheel rotational speed, calculated from rotational speed of engine together with the current gear selection etc. The sensor may be TPMS sensors which may indirectly provide information about tire conditions and potential changes in tire friction. Significant deviations from expected tire behavior may indicate variations in friction. To this end, wheel speed sensors, for example, as part of the anti-lock braking system (ABS) or traction control system (TCS) may be used to determine the tire friction. By analyzing differences in wheel speeds during acceleration, braking, and cornering, the vehicle's onboard computer can infer changes in tire friction. Inertial Measurement Units (IMUs) may be used to measure vehicle acceleration, yaw rate, and roll rate, providing data on vehicle dynamics and motion. Analyzing IMU data in conjunction with wheel speed information may allow the vehicle's control system to estimate tire-road friction.

Optionally in some examples, including in at least one preferred example, the determining if the detection of a change in tire friction for a plurality of the tires comprises detecting a first tire friction value at a first point in time and detecting a second tire friction value at a second point in time, the second point in time being after the first point in time, wherein the method further comprises monitoring the ignition status of the vehicle and determining if a change in ignition status has occurred in between the first and the second point in time. A technical benefit may include that a more reliable determining of a tire change for the vehicle is provided. Put differently, a detected change in tire friction for all or a plurality of the tires at two points in time, in between which, the engine has been turned off indicates that there has been a stand-still for the vehicle. Changes to the tire friction while the vehicle is moving may therefore be rejected. A more reliable updating of the tire friction values based on the detected change of tire friction parameters and the date or time period for summer or winter tire changeover may thereby be provided.

Optionally in some examples, including in at least one preferred example, the method comprises predicting a vehicle range for the vehicle using the updated tire friction values. A technical benefit may include that a more accurate vehicle range for the vehicle may be provided.

Optionally in some examples, including in at least one preferred example, the method comprises sending the updated tire friction values to a charge planner for the vehicle such that the charge planning for the vehicle comprises data pertaining to an updated vehicle range. A technical benefit may include that a more accurate and effective trip planning is provided. A more optimized energy management may be provided.

Optionally in some examples, including in at least one preferred example, the charge planner is configured to adjust target State-Of-Energy, SoE, based on the updated vehicle range. A technical benefit may include that the remaining driving range for the vehicle may be more accurately determined. By way of example, the SoE may be shifted upward or downward depending on a larger or a smaller friction value. The charging planner may choose to adapt a charging target upwards, in order to compensate for increased friction without losing any driving range for a vehicle.

The SoE for a vehicle, particularly for electric vehicles, EVs, may be understood to refer to the current level of energy stored in the vehicle's battery or energy storage system. SoE may represents the amount of energy available for propulsion and other vehicle functions at a given time. The SoE is typically expressed as a percentage of the total energy capacity of the battery for the vehicle. Monitoring the SoE may be important for drivers of electric vehicles to understand how much energy is remaining in the battery and to plan their driving accordingly. The monitoring may help the drivers estimate the remaining driving range and determine when and where to recharge the vehicle.

According to a second aspect of the invention, there is provided a system for tire change adaption of a vehicle having tires, the system comprising: a vehicle range estimator; a sensor configured to detect a change in tire friction for a plurality of the tires by monitoring one or more tire parameters; a control unit in communication with the sensor and the vehicle range estimator; a memory comprising data pertaining to a calendar ; wherein the control unit is configured to: register a point in time associated with the occurrence of the detected change in tire friction as detected by the sensor ; performing a calendar query to the calendar, the calendar query pertaining to the registered point in time; determining a tire friction difference value pertaining to the detected change of tire friction; and upon the tire friction difference value being above a threshold value and the registered point in time being associated with, as determined by the calendar query, a calendar event, the calendar event pertaining to a date or time period for summer or winter tire changeover; communicating with the vehicle range estimator comprising tire friction values and updating the tire friction values based on the detected change of tire friction.

The memory may form part of the control unit. The memory may be accessible by the control unit via a communication channel.

The memory may alternatively be accessible via a network comprising a server.

Optionally in some examples, including in at least one preferred example, the system comprises a charge planner and wherein the control unit is configured to send the updated tire friction values to the charge planner for the vehicle such that an updated vehicle range form part of the charge planning. A technical benefit may include that a more accurate planning of when and where to recharge the vehicle may be provided.

According to a third aspect of the invention, there is provided a vehicle comprising the system as described.

Optionally in some examples, including in at least one preferred example, the vehicle is an electric or a hybrid vehicle.

The vehicle may be a heavy-duty vehicle.

Effects and features of the second and third aspects are to a large extent analogous to those described above in connection with the first aspect. Embodiments mentioned in relation to the first aspect are largely compatible with the second and third aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

### BRIEF DESCRIPTION OF THE DRAWINGS

Examples are described in more detail below with reference to the appended drawings.
**FIG. 1** illustration of a system for tire change adaption of a vehicle having tires according to an example.
**FIG. 2** is an exemplary illustration of a vehicle comprising the system of **FIG. 1****.**
**FIG. 3** shows a flow chart schematically illustrating a method for tire change adaption of a vehicle having tires according to some examples.
**FIGs. 4a** to **4d** illustrate schematically tire friction estimates over time and driving range estimates for a vehicle according to some examples.
**FIG. 5** shows a flow chart schematically illustrating the updating the tire friction values according to some examples.
**FIG. 6** is another view of **FIG. 1****,** according to an example.

### DETAILED DESCRIPTION

The detailed description set forth below provides information and examples of the disclosed technology with sufficient detail to enable those skilled in the art to practice the invention.

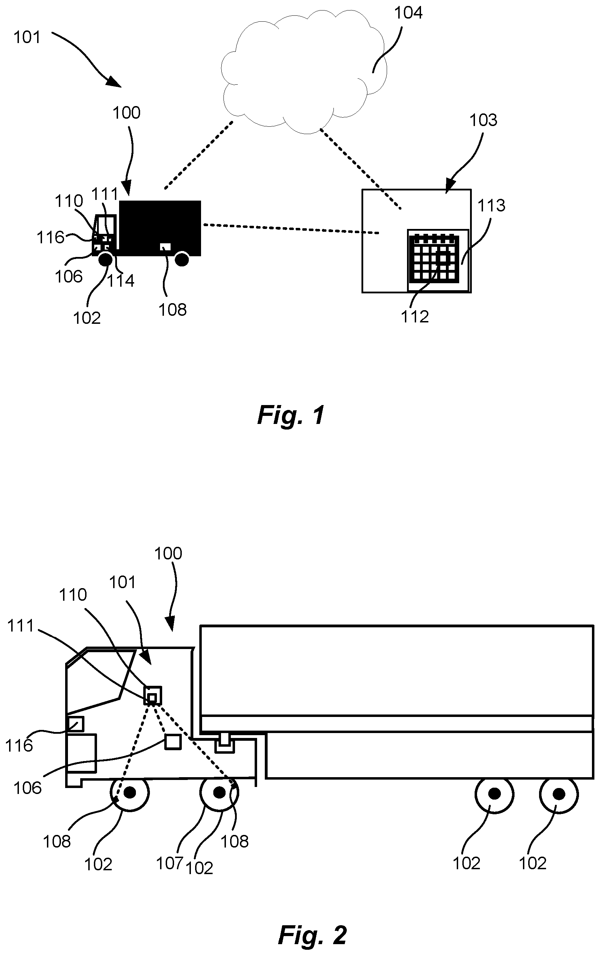

**FIG. 1** is an exemplary illustration of a system for tire change adaption of a vehicle having tires according to an example. **FIG. 2** is an exemplary illustration of a vehicle comprising the system of **FIG. 1****.** The vehicle 100 is illustrated as a heavy-duty vehicle such as a truck. The vehicle 100 may be an electric or a hybrid vehicle.

With reference to **FIGs. 1** and **2****,** the system 101 comprises: a vehicle range estimator 106 and a sensor 108. The sensor 108 is configured to detect a change in tire friction for a plurality of the tires 102 by monitoring one or more tire parameters. The sensor may, for example, be a tire pressure sensor. The tire pressure sensor may form part of a Tire Pressure Monitoring System (TMPS). The sensor 108 may be a tire pressure sensor. The sensor 108 may form part of a sensor system. The sensor system may comprise a plurality of similar or different sensors for determining one or more tires parameters. The sensor system may comprise temperature sensors. The sensor system may comprise sensors from which an estimate of the tire friction may be determined. According to some examples, the determining may be based on sensor data and force equations comprising data associated with the delivered torque/wheel force as input, in combination with road inclination, vehicle speed and/or wind speed.

The one or more tire parameters may be one or more of a tire radius, a tire pressure, a tire strain value, and a tire temperature. To this end, the tire radius may be used to calculate wheel force from the torque delivered. The tire parameter pertaining to tire pressure may be used as to determine and/or to indicate if one or more of the tires were suddenly changed. The tire pressure may further be used to improve the accuracy in calculating the effective wheel radius, e.g. due to compression from the load on the vehicle. The tire strain value may be used in order to calculate the forces acting in the tire and on the tire. The tire temperature may further affect the tire pressure.

The system 101 may further comprise a control unit 110 in communication with the sensor 108 and the vehicle range estimator 106. The control unit 110 may form part of a control system. The control unit 110 may comprise a processor for processing data. The system 101 may comprise a memory 111 comprising data pertaining to a calendar 112. Put differently, the memory 111 may comprise calendar data.

The memory 111 may form part of the control unit 110. The memory may alternatively be a remote memory 113. The remote memory 113 may form part of a server 103. The server 103 may be remotely located in relation to the vehicle 100. The control unit 110 may access data from the memory via a wireless network 104. The server 103 and the control unit 110 may communicate via the wireless network 104. The wireless network 104 may be cloud based. The control unit 110 may comprise or be communicatively connected to a communication unit. The communication unit may be configured to send data remotely, e.g. to the server 103.

The wording vehicle range estimator may be understood as a unit in a vehicle, particularly in electric vehicles, EVs, or vehicles with alternative powertrains, that calculates and predicts the remaining driving range based on various factors such as battery state of charge, vehicle parameters such as tire parameters, driving parameters such as speed and acceleration and energy consumption. It may further be noted that the system may be used for a plurality of different types of drivelines.

In more detail, the control unit 110 may be configured to: register a point in time associated with the occurrence of the detected change in tire friction as detected by the sensor 108; performing a calendar query to the calendar 112, the calendar query pertaining to the registered point in time; determining a tire friction difference value pertaining to the detected change of tire friction; and upon the tire friction difference value being above a threshold value and the registered point in time being associated with, as determined by the calendar query, a calendar event, the calendar event pertaining to a date or time period for summer or winter tire changeover; communicating 210 with the vehicle range estimator 106 comprising tire friction values and updating 212 the tire friction values based on the detected change of tire friction.

The system 101 may comprise a charge planner 114. The control unit 110 may be configured to send data to the charge planner 114. The control unit 110 may further be configured to send the updated tire friction values to the charge planner 114 for the vehicle 100 such that an updated vehicle range form part of the charge planning. Put differently, the control unit 110 may be configure to send data pertaining to the tire friction values to the charge planner. To this end, the charge planner 114 may be configured to adjust target State-Of-Energy, SoE, based on the updated vehicle range.

The calendar 112 may comprise data pertaining a date or dates associated with a changeover for summer or winter tires. In more detail, the calendar 112 may comprise data pertaining to a calendar event. The calendar event may pertain to a date or time period for summer or winter tire changeover. The calendar event may pertain to a time period for which a changeover between summer and winter tires may be required. The date and/or time period may be set by a regulation in a region. The regulation may be set by an official entity such as a transport agency for a country. The date and/or time period may be set by the police authorities. The date and/or time period may be predetermined. The date and/or time period may be shifted in time for instance caused by variations in weather conditions such as low temperatures, snow or ice conditions of the roads. It may be noted that the conditions for which the regulations mandate or recommend the use of winter tires during colder months may differ between different regions and/or countries. Put differently, the decision to mandate or recommend winter tires may also depends on factors like climate, road safety concerns, and local regulations. Hence, the calendar event may be shifted in time based on local conditions and/or regulations. Some countries may moreover legally require the use of winter tires within a period of the year. The calendar event may be associated with such a time period. Put differently, the time event may according to some examples pertain to a date where a changeover between summer and winter tires is required. The date or time period may relate to a change over from winter to summer tires. The date and/or time period may relate to a change over from winter to summer tires or from summer to winter tires.

By way of example, some countries where the use of winter tires is common or legally required include:
Sweden - Winter tires are required by law from December 1st to March 31st. Studded tires are also permitted during certain periods. In more detail, during the period from 1 December to 31 March there are special requirements in Sweden on which type of tire a certain vehicle is to have when there are winter conditions on the road. These requirements apply to both light and heavy vehicles, as well as to vehicles registered in Sweden and abroad.

Norway - Winter tires are mandatory from November 1st to the first Monday after Easter on certain roads. Studded tires are allowed during specific dates. The length of time this requirement applies may vary somewhat from year to year, depending on when Easter takes place that year.

Finland - If so required by weather or road surface conditions, winter tires must be used from 1 November to 31 March. Studded tires may be used from 1 November to 31 March and also during other periods if so required by weather or road surface conditions. Winter tires may be non-studded or studded. Non-studded winter tires may be referred to as friction tires.

The system 101 may further comprise a position sensor system 116 such as a global position system, GPS. The system 101 may thereby be configured to determine a geolocation of the vehicle 100. The system thereby allows for a calendar query comprising associating the calendar event based on the geolocation. The period and/or dates for summer or winter tire changeover may thereby be determined based on the geolocation. By way of example, the system 101 may determine if the vehicle is in Sweden or in Norway. A more accurate association of the calendar event and the detected change in tire friction may thereby be obtained.

The control unit 110 may determine if the registered point in time may be associated with a calendar event based on a determined overlap in time between the registered point in time and the calendar event. The determined association may be based on a probability function. Put differently, a possible correlation between the registered point in time and the calendar event may be calculated. The likelihood of the registered point in time being associated with the calendar event may thereby be determined. The probability function may be set to directly correspond to the date or time period for summer or winter tire changeover. The probability function may span over a range in time that is larger than the date or time period for summer or winter tire changeover. By way of example, a registered point in time for a change of tires that has occurred a few days before the regulated date for summer or winter tire changeover may thereby be correctly determined to be associate with the tire changeover. The probability function may be configured such that the probability values are largest at the date or time period for tire changeover. The probability function may further be configured such that the probability values decrease as the point in time moves away from the date or time period for tire changeover. The determining of the registered point in time being associated with a date or time period for summer or winter tire changeover may be based on probability threshold values. A probability value being larger than the probability threshold value may indicate a positive correlation between the registered point in time and the calendar event.

The control unit 110 may determine if the registered point in time may be associated with a calendar event based on the registered point in time being within a predetermined time period. The predetermined time period may overlap with and span in time before and/or after date or time period for summer or winter tire changeover. By way of example, the predetermined time period may overlap with and span in time before the date for changeover from summer to winter tires. The predetermined time period may overlap with and span in time after the date for changeover from winter to summer tires. The extent in time before and after the date for tire changeover may differ. By way of example, the time span after the date for tire changeover may be shorter than the time span before the tire change over.

The point in time may comprise data pertaining to a day of the year.

The point in time may comprise data pertaining to a time of the day.

The calendar event may comprise data pertaining to a scheduled tire change.

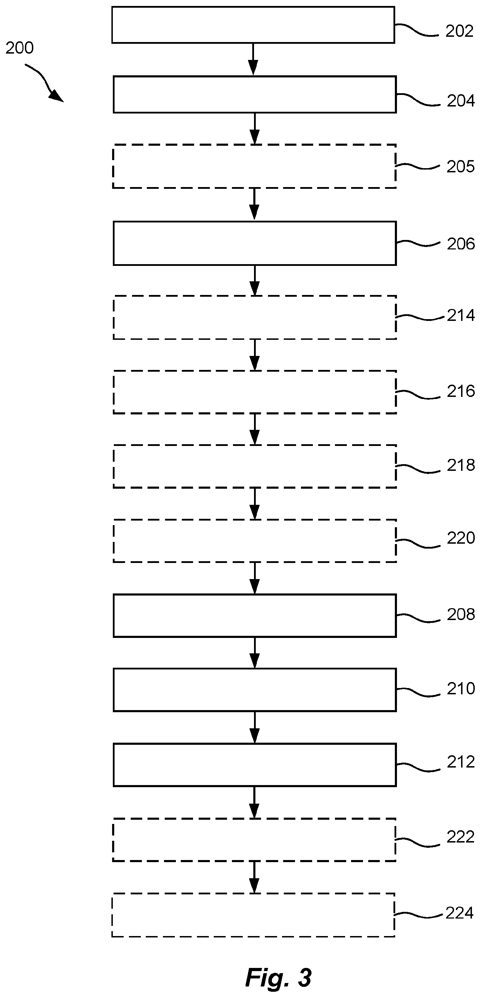

FIG. 3 shows a flow chart schematically illustrating a method for tire change adaption of a vehicle having tires according to some examples. With reference to **FIGs** 1 - **3****,** the method 200 may comprise: detecting 202 a change in tire friction for a plurality of the tires 102 by monitoring one or more tire parameters and registering 204 a point in time associated with the occurrence of the detected change in tire friction. The method 200 may comprise performing 206 a calendar query pertaining to the registered point in time and determining 208 a tire friction difference value pertaining to the detected change of tire friction. The method 200 may further comprise, upon the tire friction difference value being above a threshold value and the registered point in time being associated with, as determined by the calendar query, a calendar event, wherein the calendar event pertains to a date or time period for summer or winter tire changeover, communicating 210 with a vehicle range estimator 106 comprising tire friction values and updating 212 the tire friction values based on the detected change of tire friction.

In relation, the control unit 110 of the system 101 may be configured to: register 204 the point in time associated with the occurrence of the detected change in tire friction as detected by the sensor 108 and performing 206 a calendar query to the calendar 112. The calendar query pertains to the registered point in time. The control unit 110 may further be configured to determine 208 a tire friction difference value pertaining to the detected change of tire friction. The control unit 110 may further be configured to, upon the tire friction difference value being above a threshold value and the registered point in time being associated with, as determined by the calendar query, communicating 210 with the vehicle range estimator 106 comprising tire friction values and updating 212 the tire friction values based on the detected change of tire friction. The calendar event may pertain to a date for summer or winter tire changeover. The calendar event may pertain to a time period for summer or winter tire changeover.

With further reference to **FIGs 1** to **3****,** the method 200 may comprise detecting 202 of a change in tire friction for a plurality of the tires 102 pertains to the tires of the driving wheels 107 of the vehicle 100 or for all the tires 102 of the vehicle 100.

In the context of vehicle, for example heavy-duty vehicles such as trucks, the term "driving wheel" may be understood to refer to a wheel that receives power from the vehicle's engine and is responsible for propelling the vehicle forward.

The method 200 may further comprise determining 205 a geolocation of the vehicle 100 and wherein the calendar query comprises associating the calendar event based on the geolocation such that the date or time period for summer or winter tire changeover is determined based on the geolocation.

The determining if the detecting 202 of a change in tire friction for a plurality of the tires 102 may comprise detecting 214 a first tire friction value at a first point in time and detecting 216 a second tire friction value at a second point in time, the second point in time being after the first point in time, wherein the method further comprises monitoring 218 the ignition status of the vehicle 100 and determining 220 if a change in ignition status has occurred in between the first and the second point in time.

The method may comprise predicting 222 a vehicle range for the vehicle 100 using the updated tire friction values.

The method may comprise sending 224 the updated tire friction values to a charge planner 114 for the vehicle 100 such that the charge planning for the vehicle 100 comprises data pertaining to an updated vehicle range.

According to some examples, the method comprises using a range prediction model. The range prediction model may be used on-board the vehicle. Alternatively, the range prediction model may be used off-board the vehicle.

According to some examples, a charging model may be used by the method. The charging model may be configured to adjust a charging target of an electrical vehicle upwards or downwards based on the determined change of tire friction. A maintained predetermined driving range may thereby be obtained for the vehicle.

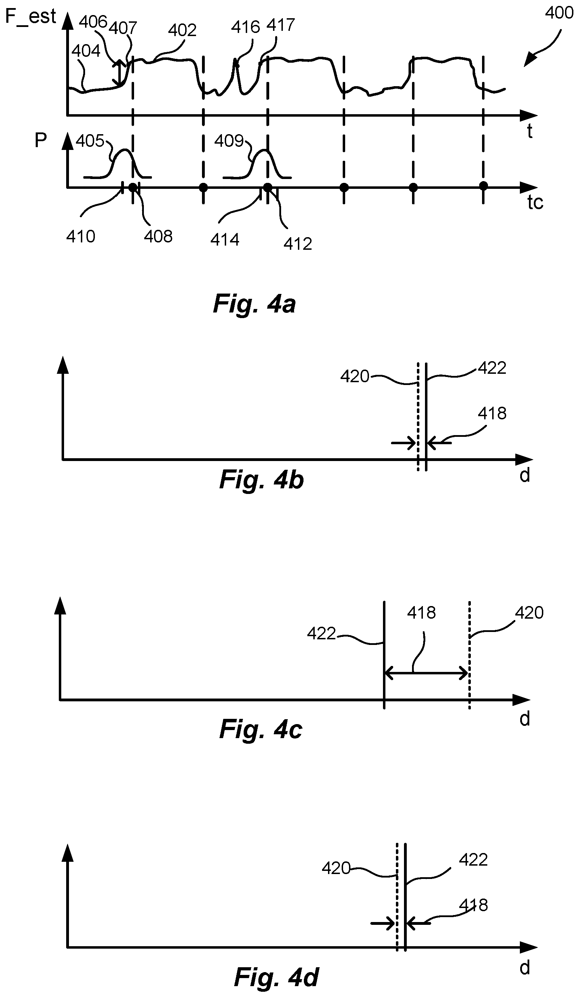

**FIGs. 4a** to **4d** illustrate schematically tire friction estimates over time and driving range estimates for a vehicle according to some examples. In **FIG. 4a** tire friction estimates, F_est, 400 over time, t, are illustrated over several calendar years. By way of example the tire friction may vary between higher tire friction values 402 during the winter months and lower tire friction values 404 outside the winter months, e.g. during the summer. The higher tire friction values 402 may pertain to winter tires and the lower friction values 404 may pertain to summer tires. **FIG 4a** further illustrates a probability function 405 illustrating a likelihood or probability, P, that a registered point in time is associated with a calendar event, e.g. for a given time of the year.

By way of example, the method 200 and system 101 for tire change adaption may be related to the determined tire friction difference value pertaining to the detected change of tire friction, indicated by the arrow 406, as discussed above. The date 408 or time period 410 for winter/summer tire changeover are also illustrated in **FIG. 4a****.** In more detail, the changeover is here illustrated from summer to winter tires. Hence, method 200 allows by performing a calendar query pertaining to the registered point in time 407 and determining a tire friction difference value pertaining to the detected change of tire friction. The method 200 may therefore determine when the tire friction difference value is above a threshold value and the registered point in time 407 is associated with the calendar event, communicate with the vehicle range estimator and update the tire friction values based on the detected change of tire friction.

In contrast, if the point in time associated with the occurrence of the detected change in tire friction is not associated with a date or time period for summer or winter tire changeover the tire friction values are not updated. This is this case for the exemplified registered point in time 416, which is not associated with the date 412 or time period 414 for winter/summer tire changeover. This is also exemplified by the probability function 409 having a lower probability value at the point in time 416 than for example at a point in time 417 falling within the time period 412 for tire changeover. The registered point in time 416 may by way of example instead be associated with a reduced tire pressure or a tire pressure sensor failure.

**FIG. 4b** illustrates an example of the driving range, d, for a vehicle, where the tires of the vehicle have been determined to correspond to low friction values, e.g. friction values corresponding to summer tires, and the range estimator comprises tire friction values corresponding to such low friction values. The prediction error 418 between estimated vehicle range 420 and the actual driving range 422 for a vehicle can be reduced.

**FIG. 4c** illustrates, in contrast, an example where the actual tire friction is high (due to a tire change between summer/winter tires), and where the range estimator comprises tire friction values corresponding to such lower friction values. The prediction error is therefore larger.

To this end, **FIG. 4d** illustrates an example of where both the actual tires have higher friction values and the tire friction values of the range estimator has been updated to also comprise higher friction values according to the method 200 described above. The prediction error 418 may thereby be reduced.

In more detail, the calendar 112 may comprise data pertaining to a calendar event. The calendar event may pertain to a date or time period for summer or winter tire changeover. The calendar event may pertain to a time period for which a changeover between summer and winter tires may be required

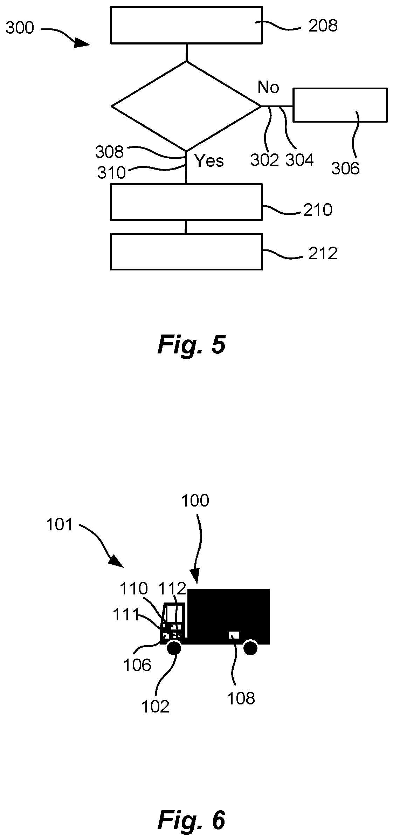

**FIG. 5** shows a flow chart 300 schematically illustrating the updating 212 of the tire friction values according to some examples. An update of friction values is based on the determined 208 tire friction difference values and the registered point in time as discussed above. Thus, if the tire friction difference value is determined 302 to not be above a threshold value and/or the registered point in time is determined 304 to not be associated with, a calendar event, the friction values are not updated 306. If, however, the tire friction difference value is determined 308 to be above a threshold value and the registered point in time is determined 310 to be associated with a calendar event, the control unit 110 communicates 210 with a vehicle range estimator 106 and the tire friction values are updated 212.

**FIG. 6** is another view of **FIG. 1****,** according to an example. **FIG. 6** illustrates a system for tire change adaption of a vehicle having tires, the system 101 comprising: a vehicle range estimator 106; a sensor 108 configured to detect a change in tire friction for a plurality of the tires 102 by monitoring one or more tire parameters; a control unit 110 in communication with the sensor 108 and the vehicle range estimator 106; a memory 111 comprising data pertaining to a calendar 112; wherein the control unit 110 is configured to: register a point in time associated with the occurrence of the detected change in tire friction as detected by the sensor 108; performing a calendar query to the calendar 112, the calendar query pertaining to the registered point in time; determining a tire friction difference value pertaining to the detected change of tire friction; and upon the tire friction difference value being above a threshold value and the registered point in time being associated with, as determined by the calendar query, a calendar event, the calendar event pertaining to a date or time period for summer or winter tire changeover; communicating with the vehicle range estimator 106 comprising tire friction values and updating the tire friction values based on the detected change of tire friction.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the present invention as specified by the appended claims. In the drawings and specification, there have been disclosed aspects for purposes of illustration only and not for purposes of limitation, the scope of the invention being set forth in the following claims.

## Claims

1. A method for tire change adaption of a vehicle having tires, the method (200) **characterized by**:
detecting (202) a change in tire friction for a plurality of the tires (102) by monitoring one or more tire parameters;
registering (204) a point in time associated with the occurrence of the detected change in tire friction and performing (206) a calendar query pertaining to the registered point in time;
determining (208) a tire friction difference value pertaining to the detected change of tire friction; and upon the tire friction difference value being above a threshold value and the registered point in time being associated with, as determined by the calendar query, a calendar event, wherein the calendar event pertains to a date or time period for summer or winter tire changeover;
communicating (210) with a vehicle range estimator (106) comprising tire friction values and updating (212) the tire friction values based on the detected change of tire friction.

2. The method according to claim 1, wherein the detecting (202) of a change in tire friction for a plurality of the tires (102) pertains to all driving wheels (107) of the vehicle (100) or for all the tires (102) of the vehicle (100).

3. The method according to claim 1 or 2, wherein the point in time comprises data pertaining to a day of the year.

4. The method according to any one of claims 1 to 3, wherein the point in time comprises data pertaining to a time of the day.

5. The method according to any one of claims 1 to 4, wherein the calendar event comprises data pertaining to a scheduled tire change.

6. The method according to any one of claims 1 to 5, wherein the method further comprises determining (205) a geolocation of the vehicle (100) and wherein the calendar query comprises associating the calendar event based on the geolocation such that the date or time period for summer or winter tire changeover is determined based on the geolocation.

7. The method according to any one of claims 1 to 6, wherein the one or more tire parameters is one or more of a tire radius, a tire pressure, a tire strain value, and a tire temperature.

8. The method according to any one of claims 1 to 7, wherein the determining if the detecting (202) of a change in tire friction for a plurality of the tires (102) comprises detecting (214) a first tire friction value at a first point in time and detecting (216) a second tire friction value at a second point in time, the second point in time being after the first point in time, wherein the method further comprises monitoring (218) the ignition status of the vehicle (100) and determining (220) if a change in ignition status has occurred in between the first and the second point in time.

9. The method according to any one of claims 1 to 8, further comprising predicting (222) a vehicle range for the vehicle (100) using the updated tire friction values.

10. The method according to any one of claims 1 to 9, further comprising sending (224) the updated tire friction values to a charge planner (114) for the vehicle (100) such that the charge planning for the vehicle (100) comprises data pertaining to an updated vehicle range.

11. The method according to claim 10, wherein the charge planner (114) is configured to adjust target State-Of-Energy, SoE, based on the updated vehicle range.

12. A system for tire change adaption of a vehicle having tires, the system (101) comprising:
a vehicle range estimator (106);
a sensor (108) configured to detect (202) a change in tire friction for a plurality of the tires (102) by monitoring one or more tire parameters;
a control unit (110) in communication with the sensor (108) and the vehicle range estimator (106);
a memory (111) comprising data pertaining to a calendar (112);
**characterized in that** the control unit (110) is configured to:
register (204) a point in time associated with the occurrence of the detected change in tire friction as detected by the sensor (108);
performing (206) a calendar query to the calendar (112), the calendar query pertaining to the registered point in time;
determining (208) a tire friction difference value pertaining to the detected change of tire friction; and
upon the tire friction difference value being above a threshold value and the registered point in time being associated with, as determined by the calendar query, a calendar event, the calendar event pertaining to a date or time period for summer or winter tire changeover;
communicating (210) with the vehicle range estimator (106) comprising tire friction values and updating (212) the tire friction values based on the detected change of tire friction.

13. The system according to claim 12 further comprising a charge planner (114) and wherein the control unit (110) is configured to send (224) the updated tire friction values to the charge planner (114) for the vehicle (100) such that an updated vehicle range form part of the charge planning.

14. A vehicle (100) comprising the system according to claim 12 or 13.

15. The vehicle of claim 14, wherein the vehicle (100) is an electric or a hybrid vehicle.

## Patentansprüche

1. Verfahren zur Reifenwechselanpassung eines Fahrzeugs mit Reifen, wobei das Verfahren (200) durch Folgendes gekennzeichnet ist:
Erkennen (202) einer Veränderung der Reifenreibung bei einer Vielzahl der Reifen (102) durch Überwachen eines oder mehrerer Reifenparameter;
Erfassen (204) eines Zeitpunkts, der mit dem Auftreten der erkannten Veränderung der Reifenreibung verknüpft ist, und Durchführen (206) einer Kalenderabfrage bezüglich des erfassten Zeitpunkts;
Bestimmen (208) eines Reifenreibungsdifferenzwerts bezüglich der erkannten Veränderung der Reifenreibung; und, wenn der Reifenreibungsdifferenzwert über einem Schwellenwert liegt und der erfasste Zeitpunkt, wie durch die Kalenderabfrage bestimmt, mit einem Kalenderereignis verknüpft ist, wobei sich das Kalenderereignis auf ein Datum oder einen Zeitraum für einen Wechsel von Sommer- oder Winterreifen bezieht;
Kommunizieren (210) mit einem Fahrzeugreichweitenschätzer (106), der Reifenreibungswerte umfasst, und Aktualisieren (212) der Reifenreibungswerte basierend auf der erkannten Veränderung der Reifenreibung.

2. Verfahren nach Anspruch 1, wobei das Erkennen (202) einer Veränderung der Reifenreibung bei einer Vielzahl der Reifen (102) sich auf alle Antriebsräder (107) des Fahrzeugs (100) oder auf alle Reifen (102) des Fahrzeugs (100) bezieht.

3. Verfahren nach Anspruch 1 oder 2, wobei der Zeitpunkt Daten bezüglich eines Tages des Jahres umfasst.

4. Verfahren nach einem der Ansprüche 1 bis 3, wobei der Zeitpunkt Daten bezüglich einer Uhrzeit des Tages umfasst.

5. Verfahren nach einem der Ansprüche 1 bis 4, wobei das Kalenderereignis Daten bezüglich eines geplanten Reifenwechsels umfasst.

6. Verfahren nach einem der Ansprüche 1 bis 5, wobei das Verfahren ferner Bestimmen (205) eines Standorts des Fahrzeugs (100) umfasst und wobei die Kalenderabfrage Verknüpfen des Kalenderereignisses basierend auf dem Standort umfasst, sodass das Datum oder der Zeitraum für den Wechsel von Sommer- oder Winterreifen basierend auf dem Standort bestimmt wird.

7. Verfahren nach einem der Ansprüche 1 bis 6, wobei der eine oder die mehreren Reifenparameter einer oder mehrere aus einem Reifenradius, einem Reifendruck, einem Reifendehnungswert und einer Reifentemperatur sind.

8. Verfahren nach einem der Ansprüche 1 bis 7, wobei das Bestimmen, ob das Erkennen (202) einer Veränderung der Reifenreibung bei einer Vielzahl der Reifen (102) Erkennen (214) eines ersten Reifenreibungswerts zu einem ersten Zeitpunkt und Erkennen (216) eines zweiten Reifenreibungswerts zu einem zweiten Zeitpunkt umfasst, wobei der zweite Zeitpunkt nach dem ersten Zeitpunkt liegt, wobei das Verfahren ferner Überwachen (218) des Zündzustands des Fahrzeugs (100) und Bestimmen (220) umfasst, ob eine Veränderung des Zündzustands zwischen dem ersten und dem zweiten Zeitpunkt eingetreten ist.

9. Verfahren nach einem der Ansprüche 1 bis 8, ferner umfassend Vorhersagen (222) einer Fahrzeugreichweite für das Fahrzeug (100) unter Verwendung der aktualisierten Reifenreibungswerte.

10. Verfahren nach einem der Ansprüche 1 bis 9, ferner umfassend Senden (224) der aktualisierten Reifenreibungswerte an einen Ladeplaner (114) für das Fahrzeug (100), sodass die Ladeplanung für das Fahrzeug (100) Daten bezüglich einer aktualisierten Fahrzeugreichweite umfasst.

11. Verfahren nach Anspruch 10, wobei der Ladeplaner (114) dazu konfiguriert ist, einen Energiezustandssollwert, SoE-Sollwert, basierend auf der aktualisierten Fahrzeugreichweite anzupassen.

12. System zur Reifenwechselanpassung eines Fahrzeugs mit Reifen, wobei das System (101) Folgendes umfasst:
einen Fahrzeugreichweitenschätzer (106);
einen Sensor (108), der dazu konfiguriert ist, eine Veränderung der Reifenreibung bei einer Vielzahl der Reifen (102) durch Überwachen eines oder mehrerer Reifenparameter zu erkennen (202);
eine Steuereinheit (110), die mit dem Sensor (108) und dem Fahrzeugreichweitenschätzer (106) in Verbindung steht;
einen Speicher (111), umfassend Daten bezüglich eines Kalenders (112);
**dadurch gekennzeichnet, dass** die Steuereinheit (110) zu Folgendem konfiguriert ist:
Erfassen (204) eines Zeitpunkts, der mit dem Auftreten der erkannten Veränderung der Reifenreibung, wie durch den Sensor (108) erkannt, verknüpft ist;
Durchführen (206) einer Kalenderabfrage in dem Kalender (112), wobei sich die Kalenderabfrage auf den erfassten Zeitpunkt bezieht;
Bestimmen (208) eines Reifenreibungsdifferenzwerts bezüglich der erkannten Veränderung der Reifenreibung; und,
wenn der Reifenreibungsdifferenzwert über einem Schwellenwert liegt und der erfasste Zeitpunkt, wie durch die Kalenderabfrage bestimmt, mit einem Kalenderereignis verknüpft ist, Beziehen des Kalenderereignisses auf ein Datum oder einen Zeitraum für einen Wechsel von Sommer- oder Winterreifen;
Kommunizieren (210) mit dem Fahrzeugreichweitenschätzer (106), der Reifenreibungswerte umfasst, und Aktualisieren (212) der Reifenreibungswerte basierend auf der erkannten Veränderung der Reifenreibung.

13. System nach Anspruch 12, ferner umfassend einen Ladeplaner (114) und wobei die Steuereinheit (110) dazu konfiguriert ist, die aktualisierten Reifenreibungswerte an den Ladeplaner (114) für das Fahrzeug (100) zu senden (224), sodass eine aktualisierte Fahrzeugreichweite in die Ladeplanung einfließen.

14. Fahrzeug (100), umfassend das System nach Anspruch 12 oder 13.

15. Fahrzeug nach Anspruch 14, wobei das Fahrzeug (100) ein Elektro- oder Hybridfahrzeug ist.

## Revendications

1. Procédé d'adaptation de changement de pneu d'un véhicule pourvu de pneus, le procédé (200) étant **caractérisé par** :
la détection (202) d'un changement de frottement de pneu pour une pluralité des pneus (102) par la surveillance d'un ou plusieurs paramètres de pneu ;
l'enregistrement (204) d'un instant associé à l'occurrence du changement de frottement de pneu détecté et l'exécution (206) d'une requête de calendrier se rapportant à l'instant enregistré ;
la détermination (208) d'une valeur de différence de frottement de pneu se rapportant au changement de frottement de pneu détecté ; et lorsque la valeur de différence de frottement de pneu est supérieure à une valeur seuil et que l'instant enregistré est associé, tel que déterminé par la requête de calendrier, à un événement de calendrier, dans lequel l'événement de calendrier se rapporte à une date ou une période pour une permutation de pneus été ou hiver ;
la communication (210) avec un estimateur d'autonomie de véhicule (106) comprenant des valeurs de frottement de pneu et la mise à jour (212) des valeurs de frottement de pneu sur la base du changement de frottement de pneu détecté.

2. Procédé selon la revendication 1, dans lequel la détection (202) d'un changement de frottement de pneu pour une pluralité des pneus (102) se rapporte à toutes les roues motrices (107) du véhicule (100) ou à tous les pneus (102) du véhicule (100).

3. Procédé selon la revendication 1 ou 2, dans lequel l'instant comprend des données se rapportant à un jour de l'année.

4. Procédé selon l'une quelconque des revendications 1 à 3, dans lequel l'instant comprend des données se rapportant à une heure de la journée.

5. Procédé selon l'une quelconque des revendications 1 à 4, dans lequel l'événement de calendrier comprend des données se rapportant à un changement de pneu programmé.

6. Procédé selon l'une quelconque des revendications 1 à 5, dans lequel le procédé comprend en outre la détermination (205) d'une géolocalisation du véhicule (100) et dans lequel la requête de calendrier comprend l'association de l'événement de calendrier sur la base de la géolocalisation de sorte que la date ou la période pour la permutation de pneus été ou hiver soit déterminée sur la base de la géolocalisation.

7. Procédé selon l'une quelconque des revendications 1 à 6, dans lequel lesdits un ou plusieurs paramètres de pneu sont un ou plusieurs éléments parmi un rayon de pneu, une pression de pneu, une valeur de déformation de pneu et une température de pneu.

8. Procédé selon l'une quelconque des revendications 1 à 7, dans lequel la détermination du fait qu'un changement de frottement de pneu pour une pluralité des pneus (102) est détecté (202) comprend la détection (214) d'une première valeur de frottement de pneu à un premier instant et la détection (216) d'une seconde valeur de frottement de pneu à un second instant, le second instant étant ultérieur au premier instant, dans lequel le procédé comprend en outre la surveillance (218) de l'état d'allumage du véhicule (100) et la détermination (220) du fait de savoir si un changement d'état d'allumage s'est produit entre le premier et le second instant.

9. Procédé selon l'une quelconque des revendications 1 à 8, comprenant en outre la prédiction (222) d'une autonomie de véhicule pour le véhicule (100) à l'aide des valeurs de frottement de pneu mises à jour.

10. Procédé selon l'une quelconque des revendications 1 à 9, comprenant en outre l'envoi (224) des valeurs de frottement de pneu mises à jour à un planificateur de charge (114) pour le véhicule (100) de sorte que la planification de charge pour le véhicule (100) comprenne des données se rapportant à une autonomie de véhicule mise à jour.

11. Procédé selon la revendication 10, dans lequel le planificateur de charge (114) est configuré pour ajuster un état d'énergie, SoE, cible sur la base de l'autonomie de véhicule mise à jour.

12. Système d'adaptation de changement de pneu d'un véhicule pourvu de pneus, le système (101) comprenant :
un estimateur d'autonomie de véhicule (106) ;
un capteur (108) configuré pour détecter (202) un changement de frottement de pneu pour une pluralité des pneus (102) par la surveillance d'un ou plusieurs paramètres de pneu ;
une unité de commande (110) en communication avec le capteur (108) et l'estimateur d'autonomie de véhicule (106) ;
une mémoire (111) comprenant des données se rapportant à un calendrier (112) ;
**caractérisé en ce que** l'unité de commande (110) soit configurée pour :
enregistrer (204) un instant associé à l'occurrence du changement de frottement de pneu détecté tel que détecté par le capteur (108) ;
exécuter (206) une requête de calendrier auprès du calendrier (112), la requête de calendrier se rapportant à l'instant enregistré ;
déterminer (208) une valeur de différence de frottement de pneu se rapportant au changement de frottement de pneu détecté ; et
lorsque la valeur de différence de frottement de pneu est supérieure à une valeur seuil et que l'instant enregistré est associé, tel que déterminé par la requête de calendrier, à un événement de calendrier, l'événement de calendrier se rapportant à une date ou une période pour une permutation de pneus été ou hiver ;
communiquer (210) avec l'estimateur d'autonomie de véhicule (106) comprenant des valeurs de frottement de pneu et mettre à jour (212) les valeurs de frottement de pneu sur la base du changement de frottement de pneu détecté.

13. Système selon la revendication 12, comprenant en outre un planificateur de charge (114) et dans lequel l'unité de commande (110) est configurée pour envoyer (224) les valeurs de frottement de pneu mises à jour au planificateur de charge (114) pour le véhicule (100) de sorte qu'une autonomie de véhicule mise à jour soit intégrée à la planification de charge.

14. Véhicule (100) comprenant le système selon la revendication 12 ou 13.

15. Véhicule selon la revendication 14, dans lequel le véhicule (100) est un véhicule électrique ou hybride.
